# EUROPEAN PATENT APPLICATION

(11) **EP 2 883 852 A1**
(43) Date of publication of application: **17.06.2015**
(21) Application number: 13197304.2
(22) Date of filing: 14.12.2013
(51) Int. Cl.: C04B 28/04, C04B 14/38, C04B 24/38, C04B 24/26

(54) **A method for manufacturing concrete filled with carbon fibers**

(71) Applicant: Latvijas Universitates agentura "Latvijas Universitates Polimeru mehanikas Instituts", 1006 Riga (LV)
(72) Inventor: Arnautovs, Aleksandrs, 1039 Riga (LV); Tolks, Andris, 2008 Jürmala (LV); Beverte, Ilze, 1021 Riga (LV)
(74) Representative: Vitina, Maruta

(57) **Abstract**

The invention relates to structural industry and may be used in industrial flooring subjected to medium loads, in road borders and road sign columns, in engineering applications for moulding of a tough, smooth protective layer on concrete blocks, floors, pre-cast structures, etc. The technical problem to be solved by the present invention is the improvement of flexural strength and flexural toughness of the manufactured carbon fibers filled concrete with the reduced carbon fibers concentration ensuring the uniform distribution and reduced clamping of the carbon fibres.

The proposed method for manufacturing concrete filled with carbon fibers comprises the steps of a) mixing a dry mix of the type I Portland cement, sand, micro-filler and ethyl hydroxyl ethyl cellulose as a dispersing agent for a dry mix; b) mixing carbon fibers in the amount of 0.0025 - 0.0035 pbw for 1.0 part by weight of cement into the dry mix of the type I Portland cement, sand, micro-filler and ethyl hydroxyl ethyl cellulose, c) dissolving sodium polyacrylate as a softener of water into 40-60 % of the envisaged amount of water to obtain a water solution; d) adding gradually the obtained water solution of sodium polyacrylate into the dry mix of the type I Portland cement, sand, micro-filler, ethyl hydroxyl ethyl cellulose and carbon fibers to obtain a slurry; e) mixing the obtained slurry by a mechanical high-shear mixer for 10-20 minutes; f) dissolving a super plasticizer, trietanolamine lauryl sulphate as a surfactant and poly-methyl-siloxane as an anti foaming agent into the remaining amount of water to obtain a liquid solution; g) adding gradually the obtained liquid solution into the obtained slurry to obtain a final slurry; h) mixing the obtained final slurry by the said mixer for 20-30 minutes and pouring the mixed final slurry into a place of destination.

## Description

The invention relates to the structural industry and may be used in industrial flooring subjected to medium loads, in road borders and road sign columns, in engineering applications for moulding of a tough, smooth protective layer on concrete blocks, floors, pre-cast structures, and structures to be used in moisture or chemically aggressive media, etc.

It has been reported [US2003188667, Composite Materials Using Novel Reinforcement, Oct. 9, 2003, Inventors: Kirby Wayne Beard, Norristown, PA (US); Drew Franklin Beard, NorristoWn, PA (US)] that the materials such as Portland cement, gypsum, epoxy and polyester thermoset resins, thermoplastics, etc. are often reinforced with the fine filaments of glass, carbon, ceramic, wood pulp/cellulose and polymers or other fibers, particles or rods to provide improved strength, stiffness and toughness. Concrete (Portland cement with stone/rock aggregates and sand) is filled with steel, carbon or other rods or fibrous strands to provide engineering structures with high load carrying capabilities. Typical glass, graphite, carbon or polymer filaments, which are routinely used for filling into the cement composites, have the diameters of 10 to 20 µm and are used as continuous filament bundles or chopped monofilaments of length 5 to 30 mm. These materials do not wet out well in cement pastes due to the high surface area and leave voids or become entangled or clumped.

There is known a method for manufacturing concrete filled with carbon fibers [Pu-Woei Chen and D.D.L.Chung Concrete filled with up to 0.2 vol % of short carbon fibers, Composites, vol. 24, N1, 1993, p. 33-52] comprising the steps of:
- mixing carbon fibers with sand by hand by putting a layer of fibers, a layer of sand, a layer of fibers, a layer of sand, etc.,
- starting a mixer and then adding the mixture obtained in step 1, cement and silica fume,
- adding a water reducing agent,
- stirring with the mixer for around 5 min,
- dissolving accelerating agents in water,
- adding the accelerating agents in the mixer and stirring for around 3 min.

The mentioned concrete was manufactured by the method of wet mixing, it comprised only fine aggregate of the size less than 2 mm, the carbon fibers were of diameter 10 µm and length 5.1 mm and the concentration of the carbon fibers was 0.5 % from the weight of cement.

However, it was concluded [Pu-Woei Chen and D.D.L.Chung Concrete filled with up to 0.2 vol % of short carbon fibers, Composites, vol. 24, N1, 1993, p. 33-52] that:
a) introduction of carbon fibers increased considerably the amount of entrained air that led to the increased amount of pores in the concrete and
b) the carbon fibers exhibited a tendency to clamping and settling that created problems in the uniform dispersing of the carbon fibers in the cementitious matrix thus reducing
the effect of the carbon fibers on the flexural strength and the flexural toughness of the filled concrete.

The technical problem to be solved by the present invention is the improvement of flexural strength and flexural toughness of the manufactured carbon fibers filled concrete with the reduced carbon fibers concentration ensuring the uniform distribution and reduced clamping of the carbon fibres.

The proposed method for manufacturing concrete filled with carbon fibers comprises the steps of:
- mixing a dry mix of the type I Portland cement, sand, micro-filler and ethyl hydroxyl ethyl cellulose as a dispersing agent for a dry mix;
- mixing carbon fibers in the amount of 0.0025 - 0.0035 pbw from the weight of cement into the dry mix of the type I Portland cement, sand, micro-filler and ethyl hydroxyl ethyl cellulose,
- dissolving sodium polyacrylate as a softener of water into 40-60 % of the envisaged amount of water to obtain a water solution;
- adding gradually the obtained water solution of sodium polyacrylate into the dry mix of the type I Portland cement, sand, micro-filler, ethyl hydroxyl ethyl cellulose and carbon fibers to obtain a slurry;
- mixing the obtained slurry by a mechanical high-shear mixer for 10-20 minutes;
- dissolving a super plasticizer, trietanolamine lauryl sulphate as a surfactant and poly-methyl-siloxane as an anti-foaming agent into the remaining amount of water to obtain a liquid solution;
- adding gradually the obtained liquid solution into the obtained slurry to obtain a final slurry;
- mixing the obtained final slurry by the said mixer for 20-30 minutes and
- pouring the mixed final slurry into a place of destination.

It was determined experimentally that the improvement of the flexural strength and flexural toughness of the manufactured concrete filled with carbon fibers could be achieved using all the following additives: sodium polyacrylate as a softener of water; ethyl hydroxyl ethyl cellulose as a dispersing agent for a dry mix; trietanolamine lauryl sulphate as a surfactant and poly-methyl-siloxane as an anti-foaming agent, in addition, the described sequence of steps should be properly observed.

Polyacrylonitrile origin carbon fibers are introduced into the dry mix of the type I Portland cement, sand, micro-filler and ethyl hydroxyl ethyl cellulose in the shape of 1-2 mm wide strips, obtained by cutting the bands of polyacrylonitrile origin carbon fibers' monofilaments with the band's width of 5-15 mm, the cutting line being directed parallel to the lengthwise axis of the carbon monofilaments. Such a mode of introduction of polyacrylonitrile origin carbon fibers facilitates splitting of the 1-2 mm wide strips into monofilaments of the carbon fibers and the uniform distribution of the carbon fibers, as well as counteracts the clamping tendency of the monofilaments of the carbon fibers.

A concrete filled with carbon fibers manufactured by the proposed method comprises the ingredients, pbw:

| | |
|---|---|
| Portland cement, type I | 1.0; |
| sand of grain diameter less than 1 mm as a fine aggregate | 0.9 - 1.5; |
| silica fume as a micro-filler | 0.10 - 0.20; |
| ethyl hydroxyl ethyl cellulose as a dispersing agent for a dry mix | 0.003 - 0.009; |
| super-plasticizer | 0.015 - 0.030; |
| sodium polyacrylate as a softener of water | 0.0015 - 0.0025; |
| polydimethylsiloxane as an anti foaming agent | 0.00060 - 0.00090; |
| trietanolamine lauryl sulphate as a surfactant | 0.002 - 0.004; |
| water | 0.22 - 0.30; |
| carbon fibers | 0.0025 - 0.0035. |

It is determined experimentally that the highest improvement of flexural strength and flexural toughness of the manufactured concrete filled with carbon fibers could be achieved when the carbon fibers are introduced 0.0025 - 0.0035 pbw of the weight of cement. If the carbon fibers are introduced in the amount less than 0.0025 pbw of the weight of cement, the improvement of flexural strength and flexural toughness is insignificant. If the carbon fibers are introduced in the amount higher than 0.0035 pbw of the weight of cement, the substantial clamping of the carbon fibers takes place.

The proposed method for manufacturing concrete filled with carbon fibers is performed as described in the following examples, which are not the only possible ones.

### Example 1

The components used in the method for manufacturing concrete filled with carbon fibers of length 6 mm and comprising additives (ethyl hydroxyl ethyl cellulose as a dispersing agent for dry mix, sodium polyacrylate as a softener of water, polydimethylsiloxane as an anti foaming agent and trietanolamine lauryl sulphate as a surfactant) are the following, pbw from the weight of cement:

| | |
|---|---|
| Portland cement, type I | 1.0; |
| sand of grain diameter less than 1 mm as a fine aggregate | 1.0; |
| silica fume as a micro-filler | 0.15; |
| ethyl hydroxyl ethyl cellulose as a dispersing agent for a dry mix | 0.005; |
| super-plasticizer | 0.020; |
| sodium polyacrylate as a softener of water | 0.002; |
| polydimethylsiloxane as an anti foaming agent | 0.00075; |
| trietanolamine lauryl sulphate as a surfactant | 0.003; |
| water | 0.25; |
| carbon fibers of length 6 mm and diameter 7 µm | 0.003. |

The method for manufacturing concrete filled with carbon fibers of length 6 mm and comprising additives (ethyl hydroxyl ethyl cellulose as a dispersing agent for a dry mix, sodium polyacrylate as a softener of water, polydimethylsiloxane as an anti foaming agent and trietanolamine lauryl sulphate as a surfactant) includes the following steps.

The type I Portland cement, sand, micro-filler and ethyl hydroxyl ethyl cellulose as a dispersing agent for a dry mix are mixed by a mechanical high-shear mixer.

Polyacrylonitrile origin carbon fibers of length 6 mm are introduced into the dry mix of the type I Portland cement, sand, micro-filler and ethyl hydroxyl ethyl cellulose in the shape of 1-2 mm wide strips, obtained by cutting the bands of polyacrylonitrile origin carbon fibers' monofilaments with the band's width of 6 mm, the cutting line being directed parallel to the lengthwise axis of the carbon monofilaments.

Carbon fibers in the amount of 0.0030 pbw from the weight of cement are mixed into the dry mix of the type I Portland cement, sand, micro-filler and ethyl hydroxyl ethyl cellulose.

Sodium polyacrylate as a softener of water is dissolved into 50 % of the envisaged amount of water to obtain a water solution.

The obtained water solution of sodium polyacrylate is added gradually into the dry mix of the type I Portland cement, sand, micro-filler, ethyl hydroxyl ethyl cellulose and carbon fibers to obtain a slurry.

The obtained slurry is mixed by a mechanical high-shear mixer for 15 minutes.

The super plasticizer Sika Visco Crete D37, trietanolamine lauryl sulphate as a surfactant and polymethylsiloxane as an anti-foaming agent are dissolved into the remaining amount of water to obtain a liquid solution.

The obtained liquid solution is added gradually into the obtained slurry to obtain a final slurry.

The obtained final slurry is mixed by the said mixer for 20 minutes.

The mixed final slurry is poured into a place of destination.

For testing the mixed final slurry is poured into a mould for three-point bending samples. Six rectangular samples, 75 x 75 x 300 mm, are prepared and tested according to the ASTM C 1018-97 in a three-point bending test.

### Example 2

The components used in the method for manufacturing concrete filled with carbon fibers of length 12 mm and comprising additives (ethyl hydroxyl ethyl cellulose as a dispersing agent for a dry mix, sodium polyacrylate as a softener of water, polydimethylsiloxane as an anti foaming agent and trietanolamine lauryl sulphate as a surfactant) are the following, pbw from the weight of cement:

| | |
|---|---|
| Portland cement, type I | 1.0; |
| sand of grain diameter less than 1 mm as a fine aggregate | 1.0; |
| silica fume as a micro-filler | 0.15; |
| ethyl hydroxyl ethyl cellulose as a dispersing agent for a dry mix | 0.005; |
| super-plasticizer | 0.020; |
| sodium polyacrylate as a softener of water | 0.002; |
| polydimethylsiloxane as an anti foaming agent | 0.00075; |
| trietanolamine lauryl sulphate as a surfactant | 0.003; |
| water | 0.25; |
| carbon fibers of length 12 mm and diameter 7 µm | 0.003. |

The method for manufacturing concrete filled with carbon fibers of length 12 mm and comprising additives (ethyl hydroxyl ethyl cellulose as a dispersing agent for a dry mix, sodium polyacrylate as a softener of water, polydimethylsiloxane as an anti foaming agent and trietanolamine lauryl sulphate as a surfactant) includes the following steps. The type I Portland cement, sand, micro-filler and ethyl hydroxyl ethyl cellulose as a dispersing agent for a dry mix are mixed by a mechanical high-shear mixer.

Polyacrylonitrile origin carbon fibers of length 12 mm are introduced into the dry mix of the type I Portland cement, sand, micro-filler and ethyl hydroxyl ethyl cellulose in the shape of 1-2 mm wide strips, obtained by cutting the bands of polyacrylonitrile origin carbon fibers' monofilaments with the band's width of 12 mm, the cutting line being directed parallel to the lengthwise axis of the carbon monofilaments.

Carbon fibers in the amount of 0.0030 pbw from the weight of cement are mixed into the dry mix of the type I Portland cement, sand, the micro-filler and ethyl hydroxyl ethyl cellulose.

Sodium polyacrylate as a softener of water is dissolved into 50 % of the envisaged amount of water to obtain a water solution.

The obtained water solution of sodium polyacrylate is added gradually into the dry mix of the type I Portland cement, sand, micro-filler, ethyl hydroxyl ethyl cellulose and carbon fibers to obtain slurry.

The obtained slurry is mixed by a mechanical high-shear mixer for 15 minutes.

The super plasticizer Sika Visco Crete D37, trietanolamine lauryl sulphate as a surfactant and a polymethylsiloxane as an anti-foaming agent are dissolved into the remaining amount of water to obtain a liquid solution.

The obtained liquid solution is added gradually into the obtained slurry to obtain a final slurry.

The obtained final slurry is mixed by the said mixer for 20 minutes.

The mixed final slurry is poured into a place of destination.

For testing the mixed final slurry is poured into a mould for three-point bending samples. Six rectangular samples, 75 x 75 x 300 mm, are prepared and tested according to the ASTM C 1018-97 in a three-point bending test.

In order to evaluate the effect of the additives (ethyl hydroxyl ethyl cellulose as a dispersing agent for a dry mix, sodium polyacrylate as a softener of water, polydimethylsiloxane as an anti foaming agent and trietanolamine lauryl sulphate as a surfactant) on the flexural strength and the flexural toughness of the manufactured concrete, concrete filled with carbon fibers and comprising no said additives are manufactured as described in Examples 3 and 4 and a plain concrete comprising no carbon fibers and no additives (ethyl hydroxyl ethyl cellulose as a dispersing agent for a dry mix, sodium polyacrylate as a softener of water, polydimethylsiloxane as an anti foaming agent and trietanolamine lauryl sulphate as a surfactant) is manufactured as described in Example 5.

### Example 3 (concrete filled with carbon fibers and comprising no additives)

The components used in the method for manufacturing concrete filled with the carbon fibers of length 6 mm and comprising no additives (ethyl hydroxyl ethyl cellulose as a dispersing agent for a dry mix, sodium polyacrylate as a softener of water, polydimethylsiloxane as an anti foaming agent and trietanolamine lauryl sulphate as a surfactant) are the following, pbw from the weight of cement:

| | |
|---|---|
| Portland cement, type I | 1.0; |
| sand of grain diameter less than 1 mm as a fine aggregate | 1.0; |
| silica fume as a micro-filler | 0.15; |
| super-plasticizer | 0.020; |
| water | 0.25; |
| carbon fibers of length 6 mm and diameter 7 µm | 0.003. |

The method for manufacturing concrete filled with carbon fibers and comprising no additives (ethyl hydroxyl ethyl cellulose as a dispersing agent for a dry mix, sodium polyacrylate as a softener of water, polydimethylsiloxane as an anti foaming agent and trietanolamine lauryl sulphate as a surfactant) includes the following steps.
The type I Portland cement, sand and the micro-filler are mixed by a mechanical high-shear mixer.

Polyacrylonitrile origin carbon fibers of length 6 mm are introduced into the dry mix of the type I Portland cement, sand and micro-filler in the shape of 1-2 mm wide strips, obtained by cutting the bands of polyacrylonitrile origin carbon fibers' monofilaments with the band's width of 6 mm, the cutting line being directed parallel to the lengthwise axis of the carbon monofilaments.

Carbon fibers in the amount of 0.0030 pbw from the weight of cement are mixed into the dry mix of the type I Portland cement, sand and micro-filler.

The super plasticizer Sika Visco Crete is dissolved into the water to obtain a water solution.

The obtained water solution is added gradually into the dry mix of the type I Portland cement, sand, micro-filler and carbon fibers to obtain a final slurry.

The obtained final slurry is mixed by the said mixer for 20 minutes.

The mixed final slurry is poured into a place of destination.

For testing the mixed final slurry is poured into a mould for three-point bending samples. Six rectangular samples, 75 x 75 x 300 mm, are prepared and tested according to the ASTM C 1018-97 in a three-point bending test.

### Example 4 (concrete filled with carbon fibers and comprising no additives)

The components used in the method for manufacturing concrete filled with carbon fibers of length 12 mm and comprising no additives (ethyl hydroxyl ethyl cellulose as a dispersing agent for a dry mix, sodium polyacrylate as a softener of water, polydimethylsiloxane as an anti foaming agent and trietanolamine lauryl sulphate as a surfactant) are the following, pbw from the weight of cement:

| | |
|---|---|
| Portland cement, type I | 1.0; |
| sand of grain diameter less than 1 mm as a fine aggregate | 1.0; |
| silica fume as a micro-filler | 0.15; |
| super-plasticizer | 0.020; |
| water | 0.25; |
| carbon fibers of length 12 mm and diameter 7 µm | 0.003. |

The method for manufacturing concrete filled with carbon fibers of length 12 mm and comprising no additives (ethyl hydroxyl ethyl cellulose as a dispersing agent for a dry mix, sodium polyacrylate as a softener of water, polydimethylsiloxane as an anti foaming agent and trietanolamine lauryl sulphate as a surfactant) includes the following steps. The type I Portland cement, sand and the micro-filler are mixed by a mechanical high-shear mixer.

Polyacrylonitrile origin carbon fibers of length 12 mm are introduced into the dry mix of the type I Portland cement, sand and micro-filler in the shape of 1-2 mm wide strips, obtained by cutting the bands of polyacrylonitrile origin carbon fibers' monofilaments with the band's width of 12 mm, the cutting line being directed parallel to the lengthwise axis of the carbon monofilaments.

Carbon fibers in the amount of 0.0030 pbw from the weight of cement are mixed into the dry mix of the type I Portland cement, sand and micro-filler.

The super plasticizer Sika Visco Crete is dissolved into the water to obtain a water solution.

The obtained water solution is added gradually into the dry mix of the type I Portland cement, sand, micro-filler and carbon fibers to obtain a final slurry.

The obtained final slurry is mixed by the said mixer for 20 minutes.

The mixed final slurry is poured into a place of destination.

For testing the mixed final slurry is poured into a mould for three-point bending samples. Six rectangular samples, 75 x 75 x 300 mm, are prepared and tested according to the ASTM C 1018-97 in a three-point bending test.

### Example 5 (plain concrete)

The components used in the method for manufacturing the plain concrete comprising no carbon fibers and no additives (ethyl hydroxyl ethyl cellulose as a dispersing agent for a dry mix, sodium polyacrylate as a softener of water, polydimethylsiloxane as an anti foaming agent and trietanolamine lauryl sulphate as a surfactant) are the following, pbw from the weight of cement:

| | |
|---|---|
| Portland cement, type I | 1.0; |
| sand of grain diameter less than 1 mm as a fine aggregate | 1.0; |
| silica fume as a micro-filler | 0.15; |
| super-plasticizer | 0.020; |
| water | 0.25. |

The method for manufacturing the plain concrete comprising no carbon fibers and no additives (ethyl hydroxyl ethyl cellulose as a dispersing agent for a dry mix, sodium polyacrylate as a softener of water, polydimethylsiloxane as an anti foaming agent and trietanolamine lauryl sulphate as a surfactant) includes the following steps.
The type I Portland cement, sand and the micro-filler are mixed by a mechanical high-shear mixer.

The super plasticizer Sika Visco Crete is dissolved into the water to obtain a water solution.

The obtained water solution is added gradually into the dry mix of the type I Portland cement, sand, micro-filler and carbon fibers to obtain a final slurry.

The obtained final slurry is mixed by the said mixer for 20 minutes.

The mixed final slurry is poured into a place of destination.

For testing the mixed final slurry is poured into a mould for three-point bending samples. Six rectangular samples, 75 x 75 x 300 mm, are prepared and tested according to the ASTM C 1018-97 in a three-point bending test.

The 3-point bending samples of the concrete manufactured as described in Examples 1-5 are tested according to the Standard ASTM C 1018-97 after the following curing procedure:
- removing the said samples from the mould after 2 days and immersing into water;
- removing the said samples after 18 days from water media and keeping in room environment and at room temperature for 7 days to cure and dry.

Experimental results of three-point bending tests for the bending strength and the flexural toughness are shown in Table 1, where the bending strength σ_{B} is the first crack strength; the first peak point toughness T_{g ε} is the energy equivalent to the area under the load-deflection curve up to the first-peak deflection ε and the toughness T_{g3.0ε} is the energy equivalent to the area under the load-deflection curve up to deflection 3.0 ε (5.5 ε, 10.5 ε etc.).

**Table 1. The bending strength and the flexural toughness of the manufactured concrete of Examples 1-5, carbon fibers' concentration 0.30 pbw from the weight of cement.**

| Example No. | Carbon fibers' length, mm | Additives | σ^{b}, | Flexural toughness Tg, MPa · mm | | | |
|---|---|---|---|---|---|---|---|
| | | | MPa | Tg_{ε} | Tg_{3.0 ε} | Tg_{5.5 ε} | Tg_{10.5 ε} |
| 1 | 6 | Included | 5.70 | 0.12 | 0.50 | 0.51 | 0.57 |
| 2 | 12 | Included | 5.82 | 0.23 | 0.55 | 0.62 | 0.73 |
| 3 | 6 | - | 4.30 | 0.07 | 0.40 | 0.41 | 0.41 |
| 4 | 12 | - | 4.10 | 0.06 | 0.31 | 0.35 | 0.35 |
| 5 | - | - | 4.20 | 0.05 | 0.33 | 0.35 | 0.36 |

The effect of the carbon fibers and the additives on the flexural strength and flexural toughness of the manufactured concrete of Examples 1-4 is shown in Table 2, where K₁ is the improvement (or the decrease) of the flexural strength above the flexural strength of the plain concrete of Example 5, in % and K₂ is the improvement (or the decrease) of the flexural toughness above the flexural toughness of the plain concrete of Example 5, in %.

**Table 2. The effect of the carbon fibers and the additives on the flexural strength and flexural toughness of the manufactured concrete of Examples 1-4, carbon fibers' concentration 0.30 pbw from the weight of cement.**

| Example No | Carbon fibers' length, mm | Additives | K₁, % | K₂, % | | | |
|---|---|---|---|---|---|---|---|
| | | | σ^{b}, MPa | Tg_{ε} | Tg_{3.0 ε} | Tg_{5.5 ε} | Tg_{10.5 ε} |
| 1 | 6 | Included | 36 | 140 | 53 | 47 | 58 |
| 2 | 12 | Included | 39 | 360 | 67 | 77 | 103 |
| 3 | 6 | - | 2 | 40 | 21 | 17 | 14 |
| 4 | 12 | - | -2 | 20 | -6 | 0 | -3 |

The performed testing provided the following results:
- Without the additives (ethyl hydroxyl ethyl cellulose as a dispersing agent for a dry mix, sodium polyacrylate as a softener of water, polydimethylsiloxane as an anti foaming agent and trietanolamine lauryl sulphate as a surfactant) the improvement of the bending strength and flexural toughness of the manufactured concrete filled with carbon fibers, Examples 3 and 4, is insignificant or even the decrease of the bending strength and flexural toughness of the manufactured concrete is observed,
- With the additives (ethyl hydroxyl ethyl cellulose as a dispersing agent for a dry mix, sodium polyacrylate as a softener of water, polydimethylsiloxane as an anti foaming agent and trietanolamine lauryl sulphate as a surfactant) an improvement of around 40 % is achieved for the flexural strength of the manufactured concrete and an increase of around 60 - 103 % is achieved for the flexural toughness of the manufactured concrete. The longer carbon fibers ensure the better improvement of the flexural toughness due to the more pronounced bridging effect of the micro cracks' sides.

Competitive improvement of the flexural strength and the flexural toughness are achieved by the proposed method for manufacturing concrete filled with carbon fibers introducing into the cementitious matrix carbon fibers, that have around 30% smaller diameter and in around 40% smaller concentration from the weight of cement than the corresponding values in the known method [Pu-Woei Chen and D.D.L.Chung Concrete filled with up to 0.2 vol % of short carbon fibers, Composites, vol. 24, N1, 1993, p. 33-52].

The microscopy of the cross sections of the manufactured concrete filled with carbon fibers and comprising no additives (Examples 3 and 4) shows pores and the considerable clamping of the carbon fibers. In comparison, the microscopy of the cross sections of the concrete filled with carbon fibers manufactured according to the present invention (Examples 1 and 2) shows that the carbon fibers are distributed uniformly and the amount of gaseous inclusions is insignificant. The uniform distribution of the carbon fibers and the insignificant amount of the gaseous inclusions in the samples of Examples 1 and 2 is ensured by the additives ethyl hydroxyl ethyl cellulose as a dispersing agent for a dry mix, sodium polyacrylate as a softener of water, polydimethylsiloxane as an anti foaming agent and trietanolamine lauryl sulphate as a surfactant.

By the proposed method the best improvement of the flexural strength and the flexural toughness of the manufactured concrete filled with carbon fibers is achieved at the carbon fibers' length of 12 mm: the improvement of around 40 % is achieved for the flexural strength of the manufactured concrete and the increase of around 103 % is achieved for the flexural toughness of the manufactured concrete.

The manufactured concrete filled with carbon fibers could find practical applications in the structural industry and may be used in industrial flooring subjected to medium loads, in road borders and road sign columns, in engineering applications for moulding of a tough, smooth protective layer on concrete blocks, floors, pre-cast structures, and structures to be used in moisture or chemically aggressive media, etc.

## Claims

1. A method for manufacturing concrete filled with carbon fibers comprises the steps of:
- mixing a dry mix of the type I Portland cement, sand, micro-filler and ethyl hydroxyl ethyl cellulose as a dispersing agent for a dry mix;
- mixing carbon fibers in amount of 0.0025 - 0.0035 pbw from the weight of cement into the dry mix of the type I Portland cement, sand, micro-filler and ethyl hydroxyl ethyl cellulose,
- dissolving sodium polyacrylate as a softener of water into 40-60 % of the envisaged amount of water to obtain a water solution;
- adding gradually the obtained water solution of sodium polyacrylate into the dry mix of the type I Portland cement, sand, micro-filler, ethyl hydroxyl ethyl cellulose and carbon fibers to obtain a slurry;
- mixing the obtained slurry by a mechanical high-shear mixer for 10-20 minutes;
- dissolving a super plasticizer, trietanolamine lauryl sulphate as a surfactant and poly-methyl-siloxane as an anti foaming agent into the remaining amount of water to obtain a liquid solution;
- adding gradually the obtained liquid solution into the obtained slurry to obtain a final slurry;
- mixing the obtained final slurry by the said mixer for 20-30 minutes and
- pouring the mixed final slurry into a place of destination.

2. The method according to Claim 1, in which polyacrylonitrile origin carbon fibers are introduced into the dry mix of the type I Portland cement, sand, micro-filler and ethyl hydroxyl ethyl cellulose in the shape of 1-2 mm wide strips, obtained by cutting the bands of polyacrylonitrile origin carbon fibers' monofilaments with the band's width of 5-15 mm, the cutting line being directed parallel to the lengthwise axis of the carbon monofilaments.

3. A concrete filled with carbon fibers manufactured by the method according to Claim 1 or 2, comprising ingredients, pbw:
| | |
|---|---|
| Portland cement, type I | 1.0; |
| sand of grain diameter less than 1 mm as a fine aggregate | 0.9 - 1.5; |
| silica fume as a micro-filler | 0.10 - 0.20; |
| ethyl hydroxyl ethyl cellulose as a dispersing agent for a dry mix | 0.003 - 0.009; |
| super-plasticizer | 0.015 - 0.030; |
| sodium polyacrylate as a softener of water | 0.0015 - 0.0025; |
| polydimethylsiloxane as an anti foaming agent | 0.00060 - 0.00090; |
| trietanolamine lauryl sulphate as a surfactant | 0.002 - 0.004; |
| water | 0.22 - 0.30; |
| carbon fibers | 0.0025 - 0.0035. |
